# EUROPÄISCHE PATENTANMELDUNG

(11) **EP 4 668 260 A1**
(43) Veröffentlichungstag der Anmeldung: **24.12.2025**
(21) Anmeldenummer: 25183318.2
(22) Anmeldetag: 17.06.2025
(51) Int. Cl.: G10K 11/00, G01N 29/22, G01N 29/265, G01M 17/00, G01M 17/10

(54) **ANTRIEB FÜR RADWELLEN-PRÜFLANZE**

(30) Priorität: 20.06.2024 DE 102024117421
(71) Anmelder: Karl Deutsch Prüf- und Messgerätebau GmbH & Co. KG, 42115 Wuppertal (DE)
(72) Erfinder: SPRUCH, Wolfgang Gerhard, 14774 Brandenburg an der Havel (DE)
(74) Vertreter: Roche, von Westernhagen & Ehresmann

(57) **Zusammenfassung**

Die Erfindung betrifft unter anderem eine Vorrichtung (10) zur Ultraschallprüfung von Hohlwellen (11), insbesondere von Hohlwellen von Eisenbahn-Radsätzen (12), umfassend eine einen Ultraschall-Prüfkopf (15) aufweisende, in die Hohlwelle (11) einsteckbare Prüflanze (14), einen Grundkörper (18) mit einem Tunnel (19), durch den hindurch die Prüflanze (14) führbar ist, und einen Adapter (20) mit einem Befestigungsabschnitt (22) zur Festlegung an einem axialen Endbereich (21) der Hohlwelle (11) und mit einem Aufnahmeabschnitt (23), über den der Grundkörper (18) relativ zu der Hohlwelle (11) festlegbar ist, wobei der Grundkörper (18) einen Antrieb (24) aufweist, mit dem eine Axialverlagerung der Prüflanze (14) bewerkstelligbar ist.

## Beschreibung

Die Erfindung betrifft eine Vorrichtung zur Ultraschallprüfung von Hohlwellen nach Anspruch 1.

Die Anmelderin befasst sich seit Jahrzehnten mit der Entwicklung und Fertigung von Vorrichtungen zur Ultraschallprüfung von Hohlwellen.

Insbesondere richtet sich die Erfindung an Vorrichtungen, mit denen Hohlwellen von Radsätzen, insbesondere von Radsätzen von Schienenfahrzeugen, weiter insbesondere Hohlwellen von Eisenbahnen-Radsätzen geprüft werden können.

Derartige Hohlwellen können eine Länge von beispielsweise 2 m aufweisen, und umfassen unterschiedliche Außen- und Innendurchmesser. Die Hohlwellen eines Schienenfahrzeug-Radsatzes müssen im Hinblick auf die hohen Sicherheitsanforderungen frei von Materialfehlern sein. Insbesondere dürfen keine Lufteinschlüsse, Risse, Lunker oder andere Fehlstellen in der Hohlwelle angeordnet sein, um Unfälle und Beeinträchtigungen auszuschließen.

Eine Prüfung derartiger Hohlwellen kann beispielsweise im Werk des Herstellers der Hohlwelle, aber auch beim Hersteller eines Radsatzes oder beim Betreiber des Radsatzes, oder bei einem Wartungs- oder Instandsetzungsbetrieb erfolgen.

Mit der Vorrichtung kann eine Ultraschall-Prüfung der Hohlwelle bei Inbetriebnahme, aber z.B. auch im Zuge von Wartungs- oder Instandsetzungsarbeiten durchgeführt werden.

Im Stand der Technik sind stationäre Vorrichtungen zur Durchführung derartiger Prüfungen bekannt, die mehrere 100 kg wiegen und äußerst komplex aufgebaut sind.

Dieser Erfindung liegt die Aufgabe zugrunde, eine Vorrichtung zur Ultraschallprüfung von Hohlwellen bereitzustellen, die kompakt ausgebildet ist, und die einfach transportabel und leicht handhabbar ist.

Die Erfindung löst diese Aufgabe mit den Merkmalen des Anspruches 1.

Das Prinzip der Erfindung besteht im Wesentlichen darin, die Vorrichtung völlig neu zu konzipieren, so dass sie einen Grundkörper, einen Adapter und eine Prüflanze umfasst.

Die Prüflanze weist ein Einsteckende auf, also ein in Einsteckrichtung vorderes Ende. An diesem ist ein Ultraschall-Prüfkopf angeordnet.

Der Ultraschall-Prüfkopf kann insbesondere lösbar an der Prüflanze befestigbar sein. Für unterschiedliche, zu prüfende Hohlwellen können unterschiedliche Ultraschall-Prüfköpfe zum Einsatz kommen. Der Ultraschall-Prüfkopf wird fachmännisch auch als Sonde bezeichnet.

Die Prüflanze kann eine axiale Länge aufweisen, die der Länge der zu prüfenden Hohlwelle entspricht, oder diese übersteigt.

Die Prüflanze ist in einem Grundkörper geführt, der einen Tunnel umfasst. Der Grundkörper wird unter Zuhilfenahme eines Adapters relativ zu der Hohlwelle festgelegt. Der Adapter kann im einfachsten Falle drei Befestigungsschrauben aufweisen. Der Adapter kann z.B. an einem axial äußeren Endbereich der Hohlwelle angeschraubt werden, um eine zentrierte Positionierung des Adapters auf der Hohlwelle zu ermöglichen.

Hohlwellen des Standes der Technik können in ihrer axialen Ringstirnfläche mehrere, z.B. drei oder vier, Gewinde-Bohrungen aufweisen, an denen ein Sicherungssatz für die Lager befestigt werden und axial gesichert werden kann. Zur Prüfung der Hohlwelle kann dieser Sicherungssatz z.B. abgeschraubt werden und die vorhandenen Gewindebohrungen können zur Festlegung des Adapters verwendet werden.

Von Erfindung sind auch Vorrichtungen umfasst, bei denen der Adapter auf andere Weise als über eine Schraubbefestigung an dem Axialbereich befestigbar ist. Beispielsweise kann eine Festlegung mittels Magneten oder über eine Vakuum-Befestigung erfolgen. Auch Klemm-Befestigungen sind von der Erfindung umfasst.

Der Adapter weist einen Befestigungsabschnitt auf. Der Adapter ist über den Befestigungsabschnitt an dem axialen Endbereich der Hohlwelle, d. h. entweder unmittelbar an dem axialen Endbereich der Hohlwelle oder relativ zu dem axialen Endbereich der Hohlwelle, festlegbar.

Der Adapter umfasst auch einen Aufnahmeabschnitt. Über den Aufnahmeabschnitt an dem Adapter kann der Grundkörper relativ zu dem Adapter festgelegt werden. Im Zuge der Festlegung des Grundkörpers relativ zu dem Adapter erfolgt zugleich auch eine Festlegung des Grundkörpers relativ zu der Hohlwelle.

Insbesondere kann eine Befestigungsreihenfolge vorgegeben sein, wonach der Adapter zunächst an der Hohlwelle befestigt wird, und zugleich auch zentral zu einer Mittellängsachse der Hohlwelle positioniert wird, und erst anschließend der Grundkörper relativ zu dem Adapter befestigt wird. Der Adapter ermöglicht damit auch eine zentrierte Befestigung des Grundkörpers relativ zur Hohlwelle.

Damit ist insbesondere erreichbar, dass eine Mittellängsachse eines Tunnels des Grundkörpers in fluchtender Anordnung zu einer Mittellängsachse der Hohlwelle positioniert ist.

Eine Befestigung des Grundkörpers an dem Adapter kann beispielsweise über einen Bajonett-Verschluss in denkbar einfacher Weise erfolgen.

Hierzu kann z.B. an dem Adapter als Bestandteil des Bajonett-Verschlusses ein Element mit einem in Drehrichtung verlagerbaren Gewindeabschnitt vorgesehen sein, der mit dem Grundkörper kooperiert. Zum Beispiel kann ein Hebel vorgesehen sein, der eine Drehverlagerung dieses Elementes um nur wenige 10°, z.B. um 40°, ermöglicht. Durch Drehverlagerung dieses Hebels können z.B. kulissenschlitzartige, gekrümmte Aufnahmen für Nocken, die am Grundkörper angeordnet sind, verlagert werden. Mittels des Bajonett-Verschlusses kann der Grundkörper gegen den Adapter gespannt werden. Alternativ kann auch eine entsprechende Einrichtung am Grundkörper vorgesehen sein, in geometrisch invertierter Anordnung.

Eine Besonderheit der erfindungsgemäßen Vorrichtung ist, dass die Prüflanze zusammen mit dem Grundkörper und dem Adapter unmittelbar an der Hohlwelle getragen ist. Weder der Grundkörper noch die Prüflanze oder der Adapter sind bei der erfindungsgemäßen Vorrichtung relativ zu einer bodenseitigen Aufnahmefläche abgestützt oder gelagert. Die Prüflanze selbst kann über den Grundkörper unmittelbar an der Hohlwelle getragen, gehalten und gelagert sein. Dadurch wird die Vorrichtung sehr kompakt und leichtbauend ausgebildet.

Der Grundkörper verfügt erfindungsgemäß über einen Antrieb für die Prüflanze.

Der Antrieb ist in dem Grundkörper angeordnet. Dadurch kann der Grundkörper sehr kompakt ausgebildet sein Die Prüflanze wird erfindungsgemäß in den Grundkörper eingesteckt, durchgreift den Tunnel, und kooperiert mit dem Antrieb.

Wird der Antrieb in Gang gesetzt, kann der Antrieb die Prüflanze in Axialrichtung verlagern.

Dadurch, dass der Antrieb an dem Grundkörper angeordnet ist, ist die Vorrichtung insgesamt kompakt und leicht bauend aufgebaut.

Kompliziertere Linearantriebe oder dergleichen sind nicht erforderlich. Auch besondere Führungen für die Prüflanze sind erfindungsgemäß nicht erforderlich.

Die Vorrichtung kann auf einfache Weise an der Hohlwelle montiert und wieder demontiert werden.

Im einfachsten Fall verfügt die Prüflanze über ein Außengewinde. Das Außengewinde kann sich entlang der gesamten Axialerstreckung der Prüflanze erstrecken. Zudem kann in der Prüflanze eine Axialnut angeordnet sein. Auch die Axialnut kann sich entlang der axialen Länge der Prüflanze erstrecken.

Der Antrieb kann einen Drehantrieb umfassen, der einen Drehmitnehmer aufweist. Der Drehmitnehmer kann in der Axialnut der Prüflanze axial frei verschieblich angeordnet sein. Zugleich kann der Drehmitnehmer drehschlüssig mit der Prüflanze verbunden sein.

Der Drehantrieb kann z.B. einen Elektromotor umfassen und dessen Ausgangswelle in Rotation versetzen. Diese treibt ein Zahnrad an, das den Drehmitnehmer in Rotation versetzt. Hierdurch wird die Prüflanze drehmitgenommen.

Die Prüflanze kann in einer axial festgehaltenen Schraubenmutter, oder in einem axial festgehaltenen Schraubgewinde geführt sein. Infolge einer Drehung der Prüflanze über den Drehantrieb wird diese Rotation durch die axial festgehaltene Schraubmutter in eine Axialbewegung der Prüflanze übersetzt. Jede Rotation der Prüflanze hat also zwingend eine Axialverlagerung der Prüflanze zur Folge.

Vorteilhaft kann der Drehantrieb in beide Drehrichtungen mit der Prüflanze kooperieren. Die Prüflanze kann also in Vorschubrichtung und in Zugrichtung betrieben werden.

Gemäß einer vorteilhaften Ausgestaltung der Erfindung ist der Grundkörper mittels des Adapters derart relativ zu der Hohlwelle positionierbar, dass eine Mittellängsachse des Tunnels in fluchtender Anordnung zu einer Mittelachse der Hohlwelle steht. Dies ermöglicht eines besonders einfache geometrische Positionierung des Grundkörpers relativ zur Hohlwelle. Damit kann der Prüfkopf optimiert zentriert geführt werden.

Gemäß einer vorteilhaften Ausgestaltung der Erfindung ist der Prüfkopf an einem Einsteckende der Prüflanze, insbesondere lösbar, angeordnet ist. Diese Ausgestaltung ermöglicht eine herkömmliche Betriebsweise der erfindungsgemäßen Vorrichtung.

Für unterschiedliche zu prüfende Hohlwellen können unterschiedliche Prüfkörper vorgesehen sein. Beispielsweise können unterschiedliche Prüfköpfe unterschiedliche Abmessungen der Hohlwelle berücksichtigen. Auch können unterschiedliche Prüfköpfe unterschiedliche Messverfahren durchführen.

Gemäß einer vorteilhaften Ausgestaltung der Erfindung ist der Grundkörper an dem Aufnahmeabschnitt des Adapters mittels eines Bajonett-Verschlusses anbringbar. Dies ermöglicht eine besonders einfache Montage und Demontage des Grundkörpers relativ zu dem Adapter.

Gemäß einer vorteilhaften Ausgestaltung der Erfindung weist die Prüflanze eine axiale Länge auf, die wenigstens der Länge der Hohlwelle entspricht. Dies ermöglicht eine Prüfung der Hohlwelle in einem Zug.

Gemäß einer vorteilhaften Ausgestaltung der Erfindung umfasst der Prüfkopf einen Ultraschallwellen-Sender und einen Ultraschallwellen-Empfänger. Dies ermöglicht einen Rückgriff auf herkömmliche Elemente von Ultraschall-Prüfköpfen.

Gemäß einer vorteilhaften Ausgestaltung der Erfindung erfährt der Prüfkopf im Zuge einer Axialbewegung der Prüflanze eine Rotation. Dies ermöglicht eine Verwendung eines besonders einfach ausgebildeten Drehantriebes unter Verwendung einer einfach ausgebildeten Schraubmutter.

Gemäß einer vorteilhaften Ausgestaltung der Erfindung erfährt die Prüflanze im Zuge ihrer Axialbewegung eine Rotation. Diese Ausgestaltung der Erfindung ermöglicht eine besonders optimierte Durchführung der Ultraschall-Messung.

Gemäß einer vorteilhaften Ausgestaltung der Erfindung ist der Prüfkopf drehschlüssig mit der Prüflanze verbunden. Dies ermöglicht eine besonders einfache Konstruktion einer erfindungsgemäßen Vorrichtung.

Gemäß einer vorteilhaften Ausgestaltung der Erfindung weist die Prüflanze einen Hohlraum auf, in dem elektrische Leitungen und/oder eine Ölleitung zur Versorgung des Prüfkopfes untergebracht. Dies ermöglicht eine Bereitstellung von Betriebsspannung an dem Prüfkopf und eine Bereitstellung einer Ölversorgung über eine Drehdurchführung am hinteren Ende der Prüflanze.

Gemäß einer vorteilhaften Ausgestaltung der Erfindung weist die Prüflanze an ihrem, in Einsteckrichtung hinteren Ende eine Drehdurchführung auf. Dies ermöglicht eine besonders einfache Konstruktion einer erfindungsgemäßen Vorrichtung.

Gemäß einer vorteilhaften Ausgestaltung der Erfindung verfügt die Drehdurchführung über Schleifkontakte für elektrische Leitungen und/oder über eine dreh-abgedichtete Fluidkupplung für eine Ölleitung. Dies ermöglicht eine besonders einfache Konstruktion einer erfindungsgemäßen Vorrichtung.

Gemäß einer vorteilhaften Ausgestaltung der Erfindung umfasst der Antrieb, der als Drehantrieb ausgebildet ist, insbesondere einen Elektromotor. Dies ermöglicht eine besonders einfache Ausbildung einer erfindungsgemäßen Vorrichtung.

Gemäß einer vorteilhaften Ausgestaltung der Erfindung umfasst der Antrieb einen insbesondere um eine Mittellängsachse des Tunnels rotierenden Mitnehmer, der für eine Drehmitnahme der Prüflanze drehschlüssig mit der Prüflanze verbunden ist. Dies ermöglicht eine Bereitstellung einer konstruktiv einfachen Ausbildung eines Drehantriebes.

Gemäß einer vorteilhaften Ausgestaltung der Erfindung ist der Mitnehmer in einer Axialnut der Prüflanze axial verschieblich angeordnet. Diese Ausgestaltung der Erfindung ermöglicht eine besonders einfache Konstruktion und eine einfache Montage.

Gemäß einer vorteilhaften Ausgestaltung der Erfindung weist die Prüflanze eine Außengewinde auf. Diese Ausgestaltung der Erfindung ermöglicht eine besonders einfache Konstruktion der erfindungsgemäßen Vorrichtung.

Gemäß einer vorteilhaften Ausgestaltung der Erfindung umfasst der Antrieb ein axial fest positioniertes Schraubgewinde, insbesondere eine axial fest positionierte Schraubmutter, in der die Prüflanze geführt ist. Diese Ausgestaltung der Erfindung ermöglicht eine Ausbildung eines Antriebs als Drehantrieb. Dies ermöglicht eine einfache Konstruktion. Die Schraubmutter dient zur Übersetzung der Rotationsbewegung der Prüflanze in eine Axialbewegung. Die Schraubmutter ist daher nicht Bestandteil des Drehantriebes und kann von diesem gesondert ausgebildet sein.

Gemäß einer vorteilhaften Ausgestaltung der Erfindung umfasst der Antrieb eine Entkopplungsvorrichtung, mit der die Prüflanze von dem Antrieb zur Ermöglichung einer freien, handgetriebenen Axialverlagerung entkoppelbar ist. Dies ermöglicht z.B. die Durchführung einer Ultraschall-Messung an einer Hohlwelle auf herkömmliche, handgetriebene Weise. Bei Unklarheiten der Auswertung der Prüfergebnisse oder auch für Nachmessungen kann durch eine handgeführte detailliertere Nachmessung bei Bedarf eine Überprüfung auf herkömmliche Art durchgeführt werden.

Eine Betätigung der Kopplungsvorrichtung kann beispielsweise auf unmittelbare mechanische Weise das Außengewinde der Prüflanze von dem Antrieb entkoppeln. Die Betätigungseinrichtung kann aber gegebenenfalls auch elektrische oder elektronische Komponenten umfassen, z.B. um für eine Weiterleitung eines Steuerkommandos zu sorgen. Bei einer Ausführungsform kann die Entkopplungsvorrichtung einen Mechanismus umfassen, mit dem die Schraubmutter oder das Schraubgewinde außer Eingriff mit dem Außengewinde der Prüflanze bringbar ist. Wenn die Entkopplungsvorrichtung betätigt ist, kann die Prüflanze mit ihrem Außengewinde frei durch das Innengewinde der Schraubmutter hindurchgeschoben werden, ohne dass ein Eingriff erfolgt. Da der Mitnehmer axial verschieblich in der Nut der Prüflanze angeordnet ist, ist die Prüflanze infolge der Betätigung der Kopplungsvorrichtung vollständig von dem Antrieb entkoppelt.

Gemäß einer vorteilhaften Ausgestaltung der Erfindung ist mittels der Entkopplungsvorrichtung das Schraubgewinde, insbesondere die Schraubmutter, expandierbar. Dies ermöglicht eines besonders einfache konstruktive Ausgestaltung einer Entkopplungsvorrichtung.

Gemäß einer vorteilhaften Ausgestaltung der Erfindung weist die Vorrichtung eine Steuerung auf, die insbesondere an dem Grundkörper oder an einem über die Drehdurchführung an die Prüflanze angebundenen Beistellgerät angeordnet ist. Diese Ausgestaltung der Erfindung ermöglicht eine besonders einfache Konstruktion einer erfindungsgemäßen Vorrichtung.

Die Steuerung kann Bestandteil einer Auswerteeinheit oder Auswerteelektronik sein, oder mit einer solchen Auswerteeinheit kooperieren. Eine Auswerteeinheit kann Bestandteil des Grundgerätes oder Bestandteil eines Beistellgerätes sein. Die Vorrichtung kann z.B. auch über einen Anschluss verfügen, über den eine Auswerteeinheit mit dem Grundgerät oder mit dem Beistellgerät verbindbar ist. Der Grundkörper oder das Beistellgerät können auch einen Speicher für Messdaten und/ oder eine Recheneinheit zur Verarbeitung von Messdaten umfassen.

Gemäß einer vorteilhaften Ausgestaltung der Erfindung weist die Vorrichtung ein Display auf, das insbesondere an dem Grundkörper oder an einem gesonderten, z.B. über die Drehdurchführung an die Prüflanze angebundenen Beistellgerät angeordnet oder daran anschließbar ist. Diese Ausgestaltung der Erfindung ermöglicht eine besonders komfortable Handhabung.

Gemäß einer vorteilhaften Ausgestaltung der Erfindung ist der Adapter als Ringkörper ausgebildet. Diese Ausgestaltung der Erfindung ermöglicht eine besonders einfache Konstruktion.

Gemäß einer vorteilhaften Ausgestaltung der Erfindung beträgt das Gesamtgewicht der Vorrichtung nicht mehr als 15 kg, insbesondere nicht mehr als 10 kg. Diese Ausgestaltung der Erfindung ermöglicht eine besonders komfortable Handhabung und einen besonders einfachen Transport der Vorrichtung.

Gemäß einer vorteilhaften Ausgestaltung der Erfindung ist die Prüflanze entlang ihrer axialen Länge in wenigstens zwei Segemente teilbar ausgebildet. Diese Ausgestaltung der Erfindung ermöglicht z.B. einen handgetragenen, unkomplizierten Transport zu einem Einsatzort. Damit kann beispielsweise von Fachpersonal an einem beliebigen Ort eine Messung durchgeführt werden.

Weitere Vorteile der erfindungsgemäßen Vorrichtung ergeben sich anhand der nicht zitierten Unteransprüche sowie aus der nachfolgenden Beschreibung der in den Zeichnungen dargestellten Ausführungsbeispiele.

Darin zeigen:
- Fig. 1: In einer teilgeschnittenen, schematischen Ansicht ein Ausführungsbeispiel einer erfindungsgemäßen Vorrichtung mit einer Prüflanze, deren Prüfkopf im Bereich eines rechten Endes einer Hohlwelle eines Radsatzes angeordnet ist,
- Fig. 2: das Ausführungsbeispiel der Fig. 1, bei dem der Prüfkopf vollständig in die Hohlwelle hinein eingeschoben ist und sich am linken Ende der Hohlwelle befindet,

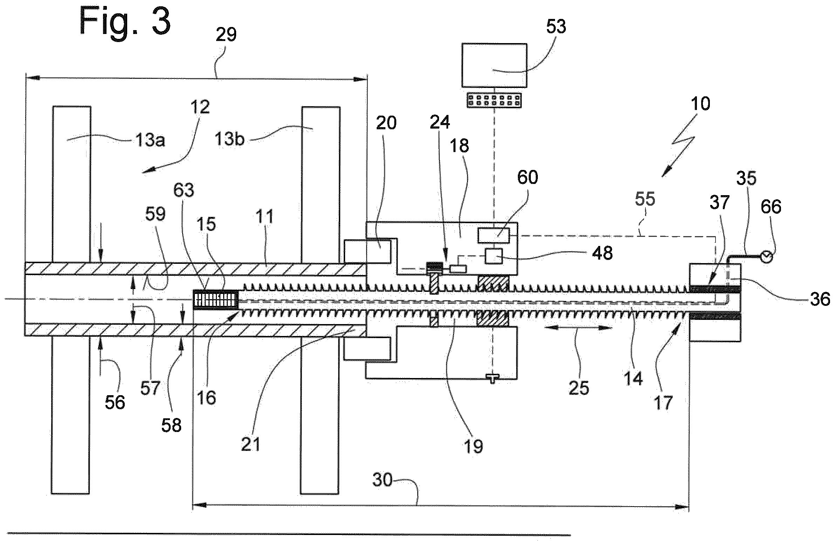

- Fig. 3: das Ausführungsbeispiel der Fig. 2, bei dem der Prüfkopf etwa mittig in der Hohlwelle angeordnet ist,
- Fig. 4: das Ausführungsbeispiel der Fig. 1, in einer schematischen, teilgeschnittenen, abgebrochenen, vergrößerten Detaildarstellung, etwa gemäß Teilkreis IV in Fig. 1, unter detaillierter Darstellung des Grundkörpers zur Veranschaulichung von Drehantrieb und Schraubmutter, und unter detaillierter Darstellung des Adapters,
- Fig. 5: in einer teilgeschnittenen, schematischen Ansicht etwa entlang Schnittlinie V-V in Fig. 4 den Drehantrieb,
- Fig. 6: in einer teilgeschnittenen schematischen Ansicht etwa entlang Schnittlinie VI-VI in Fig. 4, eine Schraubmutter unter Veranschaulichung mehrerer einzelner Segmente der Schraubmutter,
- Fig. 7: die Schraubmutter der Fig. 6 in einem expandierten Zustand,

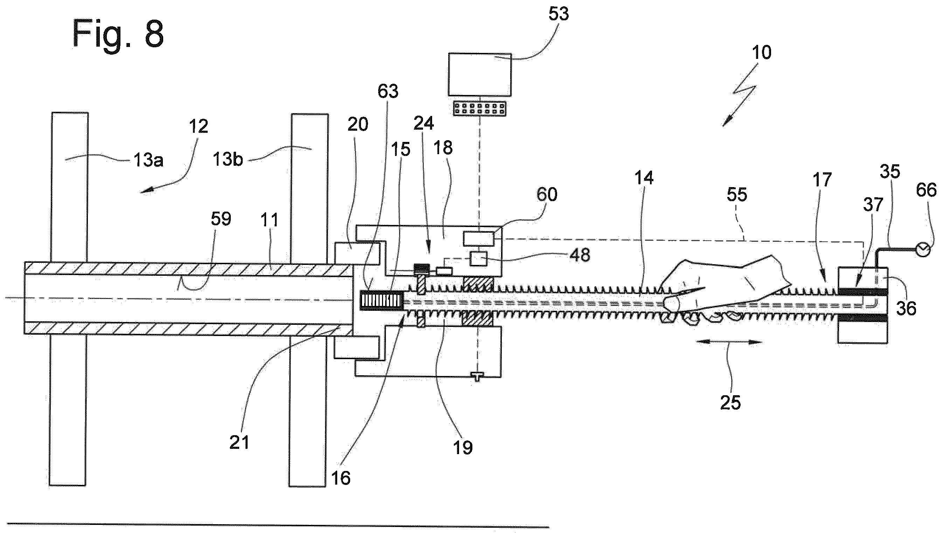

- Fig. 8: das Ausführungsbeispiel der Vorrichtung in einer Darstellung gemäß Fig. 1, wobei zur Ermöglichung einer handgetriebenen Axialverlagerung der Antrieb von der Prüflanze entkoppelt ist, und wobei zusätzlich die Hand einer Bedienperson dargestellt ist,
- Fig. 9: in Alleinstellung die Prüflanze, in einer teilgeschnittenen, schematischen Ansicht unter Darstellung zweier Teilsegmente, die voneinander mechanisch entkoppelt sind,
- Fig. 10: die Prüflanze der Fig. 9, in einem komprimierten Zustand,
- Fig. 11: ein weiteres Ausführungsbeispiel einer erfindungsgemäßen Vorrichtung, in einer Darstellung gemäß Fig. 1 unter Darstellung eines Beistellgerätes, und

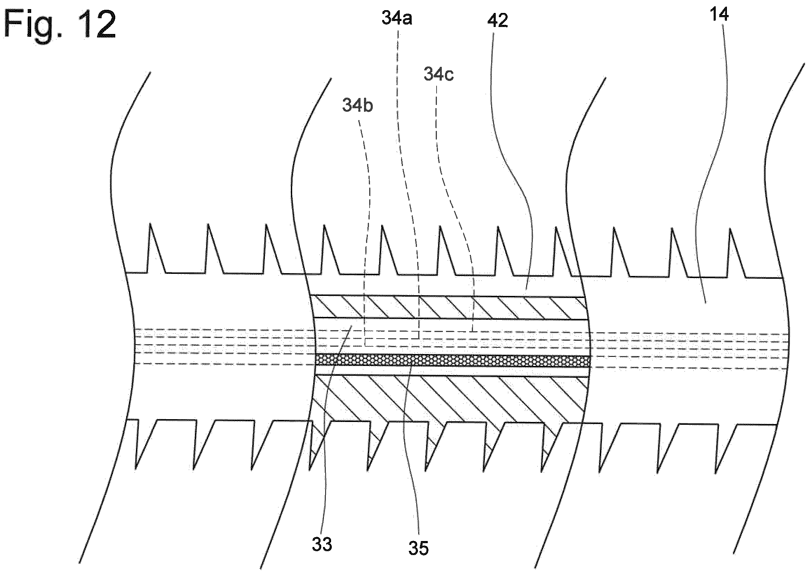

- Fig. 12: in einer teilgeschnittenen schematischen Ansicht den Axialbereich der Prüflanze gemäß Teilkreis XII in Fig. 1, zur Veranschaulichung des inneren Aufbaus der Prüflanze.

Die Ausführungsbeispiele der Erfindung werden anhand der nachfolgenden Beschreibung der Zeichnungen erläutert:
Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

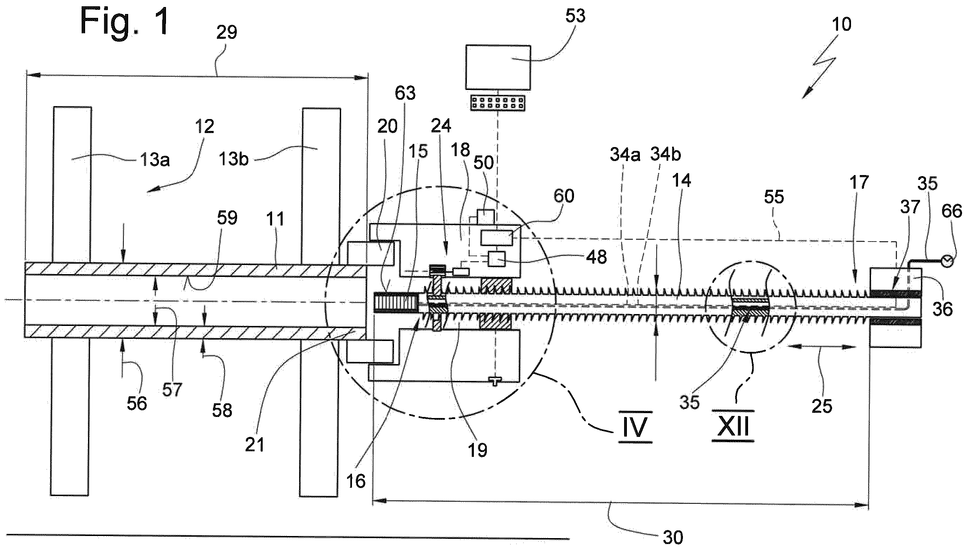

Ein Ausführungsbeispiel einer erfindungsgemäßen Vorrichtung wird in den Zeichnungen in seiner Gesamtheit mit dem Bezugszeichen 10 bezeichnet und ist in Figur 1 dargestellt.

Die Vorrichtung 10 dient zur Ultraschallprüfung des Materials einer Hohlwelle 11. Die Hohlwelle 11 ist insbesondere Bestandteil eines Radsatzes 12.

Weiter vorteilhafter Weise handelt es sich um einen Radsatz 12 eines Schienenfahrzeugs, z.B. einer Straßenbahn oder einer Eisenbahn. Der Radsatz 12 kann gemäß Figur 1 zwei - oder mehr - Räder 13a, 13b umfassen, die von der Hohlwelle 11 getragen sind. Lager und dergleichen weitere Elemente des Radsatzes 12 sind der Übersichtlichkeit halber nicht dargestellt.

Die Hohlwelle 11 besteht aus Metall, und umfasst einen Außendurchmesser 56, ein Innendurchmesser 57, und eine Wandstärke 58. Die angegebenen Maße können variieren. Insbesondere können diese von Radsatz zu Radsatz unterschiedlich sein.

Eine Materialprüfung der Hohlwelle 11 ist unerlässlich, um die Sicherheit des Schienenfahrzeuges zu gewährleisten. Es dürfen im Material der Hohlwelle 11 z.B. keine Materialrisse, Lufteinschlüsse, Lunker oder sonstige Fehler enthalten sein.

Diese können auf herkömmliche Art und Weise mittels eines Ultraschall-Prüfverfahrens ermittelt werden.

Die Vorrichtung 10 umfasst zur Durchführung der Messung eine Prüflanze 14. Die Prüflanze 14 weist eine axiale Länge 29 auf, die im Wesentlichen der axialen Länge 30 der Hohlwelle 11 entspricht, diese z.B. aber auch übersteigen kann.

Die axiale Länge 30 der Prüflanze 14 - gemessen inklusive Prüfkopf 15 - beträgt beispielsweise 200-230 cm, z.B. 215 cm.

Die Prüflanze 11 umfasst ein vorderes Ende 16, das auch als Einsteckende 16 bezeichnet wird, und ein hinteres Ende 17. Am vorderen Ende 16 der Prüflanze 14 ist der Prüfkopf 15 angeordnet.

Der Prüfkopf 15, der auch als Sonde bezeichnet wird, ist lediglich schematisch angedeutet. Er ist tatsächlich, anders als dargestellt, in Radialrichtung größer ausgebildet und liegt während der Messungen mit seiner Außenumfangsfläche unmittelbar an der Innenumfangsfläche 59 der Hohlwelle 11 an.

Insbesondere kann eine Ankopplung der im Einzelnen nicht dargestellten Schallköpfe mittels eines Ölfilms erfolgen, so dass der eigentliche Schallkopf, über einen Ölfilm geführt, zur Ankoppelung der Ultraschallsignale, in Axialrichtung 25 an der Innenumfangsfläche 59 der Hohlwelle 11 entlang bewegt wird.

Der Prüfkopf 15 ist, was in Figur 1 nicht dargestellt ist, lösbar mit dem Einsteckende 16 der Prüflanze 14 verbindbar. Insbesondere können zur Prüfung unterschiedlicher Hohlwellen 11 unterschiedliche Prüfköpfe 15 mit unterschiedlichen Außendurchmessern eingesetzt werden. Es können auch unterschiedliche Prüfköpfe 15 eingesetzt werden, die unterschiedliche Messverfahren verwenden.

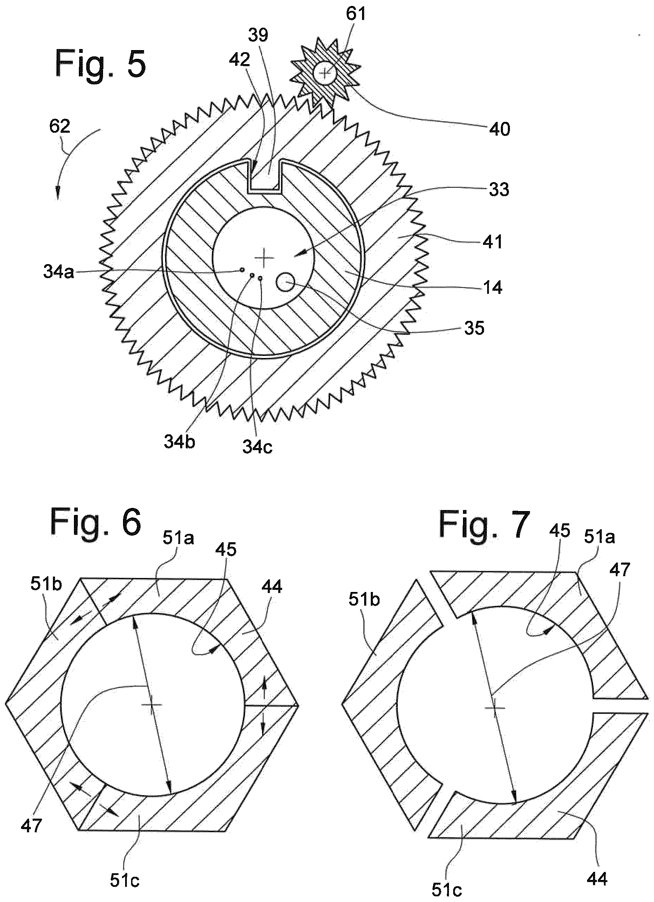

Der Prüfkopf 15 wird über lediglich angedeutete elektrische Leitungen 34a, 34b, 34c (vgl. Fig. 5) mit Betriebsspannung versorgt. Hierzu umfasst die Prüflanze 15 einen Hohlraum 33, der sich entlang der gesamten axialen Erstreckung der Prüflanze 14 erstreckt, und durch den hindurch die elektrischen Leitungen 34a, 34b, 34c geführt sind. Die Führung erfolgt bis zu einer am hinteren Ende 17 der Prüflanze angeordneten Drehdurchführung 36.

Im Bereich der Drehdurchführung 36 sind die elektrischen Leitungen 34a, 34b, 34c über im Einzelnen nicht dargestellte Schleifkontakte nach außen geführt und werden über eine Anschlussleitung 55 einer Spannungsversorgung 60 am Grundkörper 18 zugeführt bzw. sind mit der Steuerung 48 verbunden.

Die Zahl der elektrischen Leitungen ist beliebig. Die elektrischen Leitungen übertragen nicht nur Betriebsspannung, sondern auch die Signale, und zwar insbesondere Steuersignale und/ oder Messignale.

So erhält beispielsweise der Prüfkopf 15 von der Steuerung 48 Daten und Informationen, zu bestimmten Zeitpunkten Ultraschallsignale zu emittieren. Auch die vom Prüfkopf 15 erlangten Messdaten von reflektierten Schallwellen, können über die elektrischen Leitungen 34a, 34b, 34c, durch die Drehdurchführung 36 hindurch, an die Steuerung 48 weitergeleitet werden.

Die elektrischen Leitungen 34a, 34b, 34c sind lediglich schematisch zu verstehen. Beispielsweise kann es sich um ein Kabel mit beispielsweise 16 unterschiedlichen elektrischen Adern handeln.

Der Prüfkopf 15 wird bei dem Ausführungsbeispiel der Fig. 1 über einen innerhalb des Hohlraumes 33 verlaufenden Ölschlauch 34 mit Öl versorgt.

Die Drehdurchführung 36 umfasst bei diesem Ausführungsbeispiel auch eine nicht dargestellte Fluidkupplung, um von einer ausgangsseitig der Drehdurchführung 36 angeordneten, angedeuteten Ölpumpe 66 den Prüfkopf 15 mit Öl zu versorgen.

Eine wesentliche Besonderheit der erfindungsgemäßen Vorrichtung 10 besteht in der Ausgestaltung und in der Anordnung des Antriebs 24 für die Prüflanze 14.

Die Prüflanze 14 ist entlang ihrer gesamten oder nahezu gesamten axialen Länge mit einem Außengewinde 43 versehen. Die Prüflanze 14 ist darüber hinaus in einer Schraubmutter 44, die ein Innengewinde 45 aufweist, geführt. Die Schraubmutter 44 ist bezogen auf ihre Axialposition relativ fest zu einem Grundkörper 18 gehalten und in diesem Grundkörper 18 angeordnet.

Bestandteil des Grundkörpers 18 ist darüber hinaus ein Antrieb 24.

Der Antrieb 24 umfasst einen Elektromotor 38, der über seine Ausgangswelle 61 ein Ritzel 40 antreibt. Das Ritzel 40 umfasst Zähne, die mit Zähnen eines Zahnrades 41 zusammenwirken. Eine Betätigung des Elektromotors 38 führt somit zu einer Drehung der Ausgangswelle 61, und damit zu einer Drehung des Ritzels 40. Dieses überträgt seine Drehbewegung gegenläufig auf das Zahnrad 41.

Figur 5 macht deutlich, dass ein Mitnehmer 39 mit dem Zahnrad 41 verbunden ist. Dieser ragt in eine axiale Nut 42 der Prüflanze 14 hinein. Der Mitnehmer 39 ist relativ zur Prüflanze 14 frei axial verschiebbar in der Prüflanze 14 angeordnet. Der Mitnehmer 39 ist aber drehschlüssig mit der Prüflanze 14 verbunden.

Eine Rotation des Mitnehmers 39 im Rotationssinne 62 führt also zu einer Drehmitnahme der Prüflanze 14, und zugleich aufgrund der axial festgehaltenen Schraubenmutter 44 zu einer Axialverlagerung der Prüflanze 14.

Der Elektromotor 38 kann in beide Drehsinne betrieben werden, sodass eine Einfahr-Bewegung und eine Ausfahr-Bewegung der Prüflanze 14 in Relation zu der zu prüfenden Hohlwelle 11 durchgeführt werden kann.

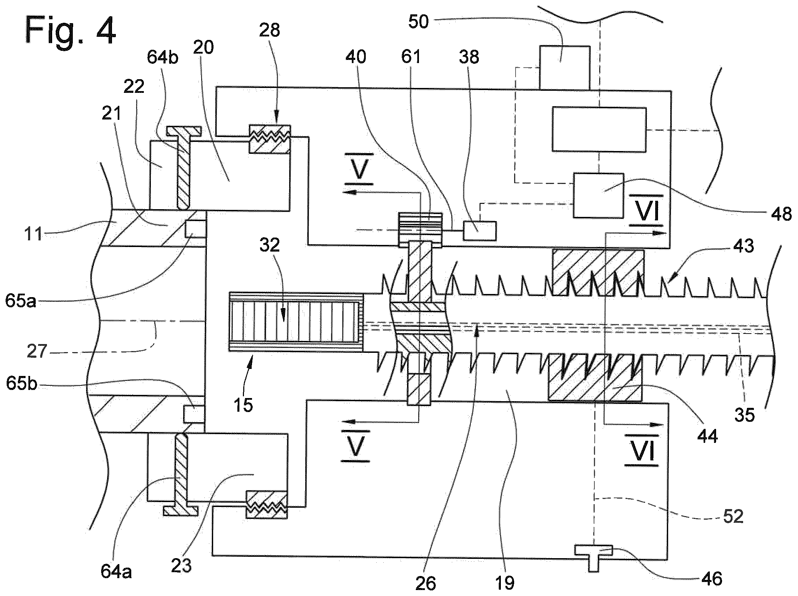

Die Vorrichtung 10 umfasst einen Adapter 20, der insbesondere als Ringkörper ausgebildet ist. Der Adapter 20 umfasst einen Befestigungsabschnitt 22, der insbesondere unmittelbar an einem axialen Endbereich 21 der Hohlwelle 11 festlegbar ist. Insbesondere kann der Befestigungsabschnitt 22 über mehrere, z.B. wenigstens drei betätigbare Schrauben auf denkbar einfache Weise an dem Axialabschnitt 21 der Hohlwelle 11, oder jedenfalls relativ zu dem Axialabschnitt 21 der Hohlwelle 11 befestigt werden. Figur 4 veranschaulicht zwei in Radialrichtung orientierte Schrauben 64a, 64b, wobei die Zahl der Schrauben 64 vom Fachmann geeignet gewählt wird. Tatsächlich wird erfindungsgemäß - anders, als dargestellt - vorzugsweise eine Schraubbefestigung vorgesehen, bei der die Schrauben 64a, 64b in Axialrichtung orientiert sind und z.B. in bei 65a, 65b angedeutete Gewindebohrungen unmittelbar an der Ringstirnfläche der zu prüfenden Hohlwelle 11 eingeschraubt werden.

Der Adapter 20 wird im Zuge seiner Befestigung so positioniert, dass eine Zentrierung stattfindet. Der Adapter 20 wird im Zuge seiner Befestigung also zentriert, relativ zu der Hohlwelle 11 befestigt.

Der Adapter 20 umfasst darüber hinaus einen Aufnahmeabschnitt 23, der zur Festlegung des Grundkörpers 18 an dem Adapter dient. Der Aufnahmeabschnitt 23 kann insbesondere Bestandteil eines Bajonett-Verschlusses 28 sein oder einen solchen ausbilden.

Zunächst wird der Adapter 20 an der Hohlwelle 11 festgelegt. Sodann wird der Grundkörper 18 durch eine einfache Bajonett-Verriegelungsbewegung, z.B. durch eine Drehung eines im Detail nicht dargestellten Verschlusses um wenige Grad, z.B. um 40°, relativ zu dem Adapter 20, an dem Adapter 20 festgelegt. Insbesondere kann an dem Adapter auch ein verlagerbares Bajonett- Verriegelungselement angeordnet sein.

Wie bei solchen Verschlüssen üblich, kann an einem der beiden Teile, also entweder an dem Grundkörper oder an dem Adapter, ein Vorsprung oder Zapfen, allgemein ein Kulissenstein, angeordnet sein, wobei an dem jeweils anderen der beiden Teile ein Kulissenschlitz angeordnet ist, in dem der Kulissenstein geführt ist.

Von der Erfindung ist insbesondere eine Modulbauweise der Vorrichtung umfasst, sodass für einen Grundkörper 18 unterschiedliche Adapter 20 vorgesehen sind, um in Anpassung an unterschiedliche Dimensionen zu prüfender Hohlwellen 11 entsprechende Festlegungen zu ermöglichen. Dabei kann der Adapter 20 jeweils einen Aufnahmeabschnitt 23 aufweisen, der bei allen Adaptern 20 gleich gehalten ist, sodass eine definierte mechanische Schnittstelle 23 am Adapter 20 zur Festlegung des Grundkörpers 18 vorgesehen ist.

Im Zuge der Festlegung des Grundkörpers 18 an den Adapter erfolgt eine exakte zentrierte Positionierung des Grundkörpers 18 relativ zur Hohlwelle 11.

Insbesondere ist eine Mittellängsachse 26 eines Tunnels 19 an dem Grundkörper 18, durch den hindurch die Prüflanze 15 geführt wird, in Flucht zu der Mittellängsachse 27 der Hohlwelle 11 angeordnet.

Die Funktionsweise der Vorrichtung 10 ist wie folgt:
Zunächst wird der Adapter 20 an dem Radsatz 12, insbesondere an den axialen Endbereich 21 der Hohlwelle 11 festgelegt. Sodann wird der Grundkörper 18 an dem Adapter 20 festgelegt.

Schließlich kann die Prüflanze 14 in den Tunnel 19 eingesetzt werden. NAchfolgend wird über eine Steuerung 48 der Vorrichtung 10 der Antrieb 24 angesprochen.

Der Antrieb 24 setzt den Elektromotor 38 in Gang, dreht die Prüflanze 14, die infolge des Zusammenwirkens von Außengewinde 43 und Schraubmutter 44 eine Axialverlagerung gemäß dem Doppelpfeil 25 erfährt.

Während der Drehung der Prüflanze 15 wird z.B. zu regelmäßigen Zeitpunkten von dem Prüfkopf 15 ein Ultraschall-Signal auf die Innenumfangsfläche 59 der Hohlwelle abgegeben. Es kann ein sogenannter "shot" abgesetzt werden, oder ein "pulse":
Infolge der Reflexion der Schallwellen kann ein entsprechendes Antwortsignal der Schallwellen aufgenommen werden. Die entsprechende Signalübermittlung der Messsignale erfolgt über elektrische Leitungen 34a, 34b, 34c zur Steuerung 48. Die Steuerung 48 kann die Messdaten und Signale aufnehmen, gegebenenfalls speichern und gegebenenfalls auch verarbeiten und gegebenenfalls auch unmittelbar anzeigen.

Die Vorrichtung 10 kann auch eine Anzeigevorrichtung oder ein Display 50 aufweisen. Die Steuerung 48 merkt sich insbesondere auch, an welcher Axialposition der Prüflanze 14, und in welcher Drehposition der Prüflanze 14, relativ zur Hohlwelle 11, der entsprechende "pulse" oder "shot" abgesetzt und die Messwerte erhalten worden sind. Ergibt die Messung, dass Materialfehlstellen in der Hohlwelle bestehen, weiß die Steuerung 48, an welcher Axialposition der Prüflanze 14 relativ zu der Hohlwelle 11 und unter welchem Drehwinkel die Fehlstelle angeordnet ist. Dies erleichtert beispielsweise eine genauere Nachmessung.

Die Daten werden von der Steuerung 48 insbesondere auch zur Dokumentation vorhaltbar bereitgestellt und/ oder gespeichert.

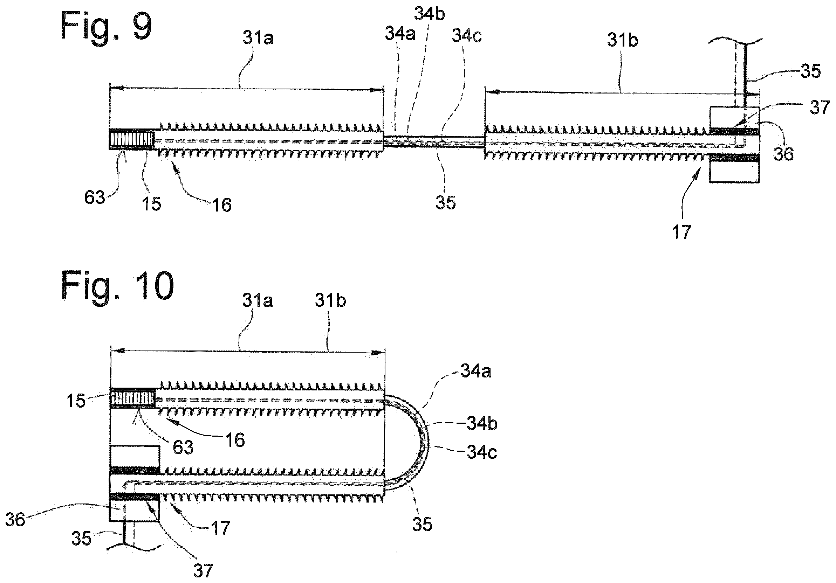

Die Figuren 9 und 10 zeigen, dass die Prüflanze 14 gemäß einem besonderen Aspekt der Erfindung in mehrere Segmente 31a, 31b unterteilbar ist. Figur 10 zeigt, dass die Segmente 31a, 31b zusammengeklappt eine komprimierte, und axial kurzbauende Transportmöglichkeit bereitstellen. Die etwa 200 cm lange Prüflanze kann also auf etwa 1 m verkürzt in einen Transportzustand verbracht werden.

Die beiden Segmente 31a, 31b können über eine nicht dargestellte mechanische Verbindungseinrichtung, z.B. eine Schraubverbindung, oder eine Steckverbindung miteinander gekoppelt und auf einfache Weise aneinander befestigt werden. Die innerhalb der Prüflanze 14 geführten Leitungen 34a, 34b, 34c und der Schlauch 35 können entlang einem flexibel gehaltenen, gebogenen Abschnittes geführt werden. Hierzu kann innerhalb der Prüflanze 14 z.B. auch eine federbelastete Flaschenzuganordnung vorgesehen sein, um für eine entsprechende Straffung der Leitungen 34 und des Schlauches 35 zu sorgen.

Diese Straffungseinrichtung ist in den Figuren der Übersichtlichkeit halber nicht dargestellt.

Das Ausführungsbeispiel der Vorrichtung 10 gemäß den Zeichnungen offenbart einen Prüfkopf 15, ohne auf die besondere Ausgestaltung von Sender und/oder Empfänger der Schallwellen einzugehen. Sender und/oder Empfänger sind mit 32 bezeichnet.

Insbesondere können der Sender und der Empfänger zu einer Baueinheit zusammengefasst sein. Der Prüfkopf 15 kann mehrere Sender und/ oder mehrere Empfänger umfassen.

Das Ausführungsbeispiel zeigt Prüfköpfe 15, die zur Ankopplung und/ oder Auskopplung der Signale von den Prüfköpfen an die Hohlwelle 11 einen Ölfilm vorsehen. Von der Erfindung sind auch Vorrichtungen mit anderen Prüfköpfen umfasst, die ohne eine solche Öl-Ankopplung auskommen.

Ein weiterer besonderer Aspekt der erfindungsgemäßen Vorrichtung ist eine in Figur 4 angedeutete und mit dem Bezugszeichen 46 versehene Entkopplungsvorrichtung.

Zuvor wurde beschrieben, dass eine Rotationsbewegung der Prüflanze 15 zwingend eine Axialverlagerung der Prüflanze 14 zur Folge hat, da die Schraubmutter 44 axial fest angeordnet ist.

Figur 6 zeigt, dass die Schraubmutter 44 mehrere einzelne Segmente 51a, 51b, 51c umfasst.

Die Vorrichtung umfasst eine Entkopplungsvorrichtung 46, die in der Lage ist, die Schraubmutter 44 aus einem Kopplungszustand gemäß Figur 6 in einen Entkopplungszustand gemäß Figur 7 zu überführen.

Gemäß Figur 7 ist der Innendurchmesser 47 der Schraubmutter 44 gegenüber dem Zustand der Figur 6 vergrößert. Die Schraubmutter 44 ist expandiert. Die Segmente 51a, 51b, 51c sind zumindest geringfügig auseinandergerückt.

In dem Entkopplungszustand der Schraubmutter 44 gemäß Figur 7 kann die Prüflanze 14 in Axialrichtung 25 durch die Schraubmutter 44 hindurchbewegt werden, ohne dass ihr Außengewinde 43 mit dem Innengewinde 45 der Schraubmutter 44 in Eingriff gerät. Die Prüflanze 14 ist also axial frei verschieblich in dem Grundkörper 20 angeordnet.

Der Mitnehmer 39 ist ebenfalls axial frei verschieblich in der Axialnut 42 angeordnet.

Eine Expansion der Schraubmutter 44 kann durch Betätigung der Entkopplungsvorrichtung 46 erreicht werden. Hierzu deutet Figur 4 eine Wirkleitung 52 an. Infolge einer Betätigung der Entkopplungsvorrichtung 46 kann auf elektrische und/ oder mechanische Weise die Schraubmutter 44 angesprochen werden und aus ihrem Kopplungszustand gemäß Figur 6 in ihren Entkopplungszustand gemäß Figur 7 überführt werden.

Durch nochmalige Betätigung der Entkopplungsvorrichtung 46 oder durch Loslassen der Entkopplungsvorrichtung 46 kann die Schraubmutter 46 aus ihrem Entkopplungszustand gemäß Figur 7 unmittelbar wieder in ihren Kopplungszustand gemäß Figur 6 überführt werden. Hierzu können in den Figuren 6 und 7 nicht dargestellte Federelemente vorgesehen werden.

Angemerkt sei, dass die Schraubmutter 44, um einen expandierten Entkopplungszustand nehmen zu können, einen gewissen Bewegungsraum benötigt, der in den Zeichnungen nicht dargestellt ist, der dem Fachmann aber selbstverständlich ist.

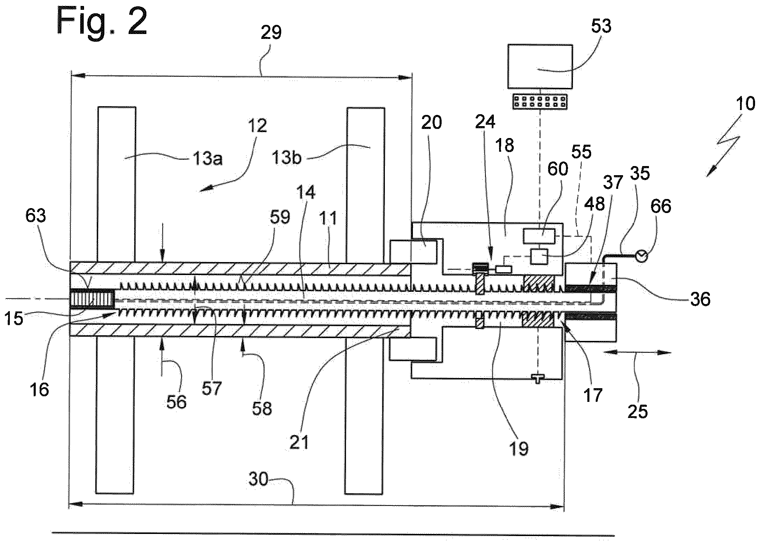

Eine Betätigung der Entkopplungsvorrichtung 46 ermöglicht auch, dass die Prüflanze 14 zunächst initial in die Vorrichtung 10 eingesteckt wird und bis zum linken Ende der Hohlwelle 11, einen Zustand gemäß Figur 2 erreichend, eingeschoben wird. Wenn dieser Zustand erreicht ist, kann ausgehend von Figur 2 die Messung beginnen und dabei die Prüflanze 14 fortwährend durch den Drehantrieb 38, 39, 40, 41 aus der Hohlwelle 11 herausgezogen werden, also bezogen auf die Figur 2 nach rechts verlagert werden. Im Verlauf der Messungen können dann sukzessive Messzustände gemäß den Figuren 2 und 1 erreicht werden. Hier wird die Prüflanze 14 also während der Messung gezogen. Hierbei handelt es sich um ein übliches Messverfahren.

Alternativ kann aber die Prüflanze 14 auch auf Schub beansprucht eine Messung durchführen.

Der Elektromotor 38 kann hierfür links und rechts drehend ausgebildet sein und durch Wahl des entsprechenden Drehsinnes die gewünschte Axialverlagerung der Prüflanze 14 bewirken.

Bei dem Ausführungsbeispiel der Figur 1 ist eine Drehdurchführung 36 zu sehen, die frei am hinteren Ende 17 der Prüflanze 14 angeordnet ist.

Die Drehdurchführung 36 sitzt auf dem hinteren Ende 17 der Lanze 14 auf. Die Lanze 14 ist in der Drehdurchführung 46 frei drehbar. Hierzu verfügt die Drehdurchführung 36 über ein Lager, insbesondere über eines oder mehrere Kugellager. Die Drehdurchführung 36 ermöglicht eine Verbindung des Prüfkopfes 15 über elektrische Leitungen mit der Steuerung 48 und mit einer entsprechenden Spannungsversorgung 66 und ermöglicht auch eine Verbindung des Prüfkopfes 15 mit einer außerhalb der Drehdurchführung 36 angeordneten, angedeuteten Ölpumpe.

Die Drehdurchführung 36 verfügt also über eine Drehkupplung mit Schleifkontakten, und über eine fluidische Drehkopplung, für die Ölleitung 35.

Bei dem Ausführungsbeispiel der Figur 1 ist die Steuerung 48 der Vorrichtung 10 in dem Grundkörper 18 angeordnet.

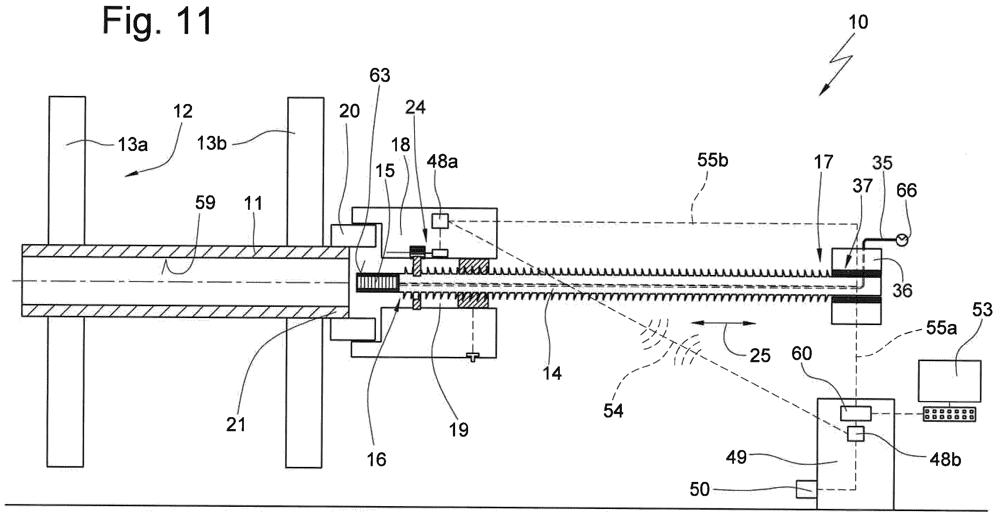

Von der Erfindung sind auch Ausführungsbeispiele umfasst, die, wie dies Figur 11 andeutet, über ein gesondertes Beistellgerät 49 verfügen. Gemäß Figur 11 ist eine Steuerung 48b in dem Beistellgerät 49 angeordnet. Das Beistellgerät 49 kann über eine Anschlussleitung 55a über die Drehdurchführung 36 mit dem Prüfkopf 15 verbunden sein.

Zugleich kann auch bei diesem Ausführungsbeispiel im Grundgerät 20 eine Steuerung 48a angeordnet sein, die mit dem Antrieb 24 zusammenwirkt.

Die Steuerung 48b des Beistellgerätes 49 kann z.B. auch über eine unmittelbare Datenverbindung 54 mit der Steuerung 48a des Grundgerätes 20 kommunizieren. Die Datenverbindung 54 kann drahtlos oder kabelgebunden sein.

Eine Kommunikation zwischen der Steuerung 48b des Beistellgerätes 49 und der Steuerung 48a des Grundgerätes 20 kann auch über die Anschlussleitungen 55a, 55b erfolgen.

In diesem Falle kann auf eine gesonderte Datenverbindung 54 verzichtet werden.

Eine Anzeige oder ein Display 50 kann bei dem Ausführungsbeispiel der Figur 11 auch zusätzlich oder ausschließlich an dem Beistellgerät 59 angeordnet sein.

Die Gesamtmasse der verwendeten Komponenten, einschließlich Adapter 20, Grundkörper 18, Prüflanze 14 und gegebenenfalls Beistellgerät 49 kann derartig gering gehalten werden, dass ein Gewicht der Gesamtvorrichtung 10 von 15 kg, insbesondere von 10 kg nicht überstiegen wird.

## Patentansprüche

1. Vorrichtung (10) zur Ultraschallprüfung von Hohlwellen (11), insbesondere von Hohlwellen von Eisenbahn-Radsätzen (12), umfassend eine einen Ultraschall-Prüfkopf (15) aufweisende, in die Hohlwelle (11) einsteckbare Prüflanze (14), einen Grundkörper (18) mit einem Tunnel (19), durch den hindurch die Prüflanze (14) führbar ist, und einen Adapter (20) mit einem Befestigungsabschnitt (22) zur Festlegung an einem axialen Endbereich (21) der Hohlwelle (11) und mit einem Aufnahmeabschnitt (23), über den der Grundkörper (18) relativ zu der Hohlwelle (11) festlegbar ist, wobei der Grundkörper (18) einen Antrieb (24) aufweist, mit dem eine Axialverlagerung der Prüflanze (14) bewerkstelligbar ist.

2. Vorrichtung (10) nach Anspruch 1, **dadurch gekennzeichnet, dass** der Grundkörper (18) mittels des Adapters (20) derart positionierbar ist, dass eine Mittellängsachse (26) des Tunnels (19) in fluchtender Anordnung zu einer Mittelachse (27) der Hohlwelle (11) steht.

3. Vorrichtung (10) nach Anspruch 1 oder 2, **dadurch gekennzeichnet, dass** der Prüfkopf (15), insbesondere lösbar, an einem Einsteckende (16) der Prüflanze (14) angeordnet ist.

4. Vorrichtung (10) nach einem der vorangegangenen Ansprüche, **dadurch gekennzeichnet, dass** der Grundkörper (18) an dem Aufnahmeabschnitt (23) des Adapters (20) mittels eines Bajonett-Verschlusses (28) anbringbar ist.

5. Vorrichtung (10) nach einem der vorangegangenen Ansprüche, **dadurch gekennzeichnet, dass** die Prüflanze (14) eine axiale Länge (30) aufweist, die wenigstens der Länge (29) der Hohlwelle (11) entspricht.

6. Vorrichtung (10) nach einem der vorangegangenen Ansprüche, **dadurch gekennzeichnet, dass** der Prüfkopf (15) einen Ultraschallwellen-Sender und einen Ultraschallwellen-Empfänger umfasst.

7. Vorrichtung (10) nach einem der vorangegangenen Ansprüche, **dadurch gekennzeichnet, dass** der Prüfkopf (15) im Zuge einer Axialbewegung der Prüflanze (14) eine Rotation erfährt.

8. Vorrichtung (10) nach einem der vorangegangenen Ansprüche, **dadurch gekennzeichnet, dass** die Prüflanze (14) im Zuge ihrer Axialbewegung eine Rotation erfährt.

9. Vorrichtung (10) nach einem der vorangegangenen Ansprüche, **dadurch gekennzeichnet, dass** der Prüfkopf (15) drehschlüssig mit der Prüflanze (14) verbunden ist.

10. Vorrichtung (10) nach einem der vorangegangenen Ansprüche, **dadurch gekennzeichnet, dass** die Prüflanze (14) einen Hohlraum (33) aufweist, in dem elektrische Leitungen (34a, 34b, 34c) und/oder eine Ölleitung (35) zur Versorgung des Prüfkopfes (15) untergebracht sind.

11. Vorrichtung (10) nach einem der vorangegangenen Ansprüche, **dadurch gekennzeichnet, dass** die Prüflanze (14) an ihrem, in Einsteckrichtung (17) hinteren Ende eine Drehdurchführung (36) aufweist.

12. Vorrichtung (10) nach einem der vorangegangenen Ansprüche, **dadurch gekennzeichnet, dass** die Drehdurchführung (36) über Schleifkontakte (37) für elektrische Leitungen und/oder über eine dreh-abgedichtete Fluidkupplung für eine Ölleitung verfügt.

13. Vorrichtung (10) nach einem der vorangegangenen Ansprüche, **dadurch gekennzeichnet, dass** der Antrieb (24) einen Drehantrieb aufweist, der insbesondere einen Elektromotor (38) umfasst.

14. Vorrichtung (10) nach Anspruch 13 **dadurch gekennzeichnet, dass** der Drehantrieb (24) einen insbesondere um eine Mittellängsachse des Tunnels (19) rotierenden Mitnehmer (39) umfasst, der für eine Drehmitnahme der Prüflanze (14) drehschlüssig mit der Prüflanze verbunden ist.

15. Vorrichtung (10) nach Anspruch 14 **dadurch gekennzeichnet, dass** der Mitnehmer (39) in einer Axialnut (42) der Prüflanze (14) axial verschieblich angeordnet ist.
